# EUROPÄISCHE PATENTSCHRIFT

(11) **EP 3 047 144 B1**
(45) Veröffentlichungstag und Bekanntmachung des Hinweises auf die Patenterteilung: **01.05.2019**
(21) Anmeldenummer: 14758299.3
(22) Anmeldetag: 01.09.2014
(51) Int. Cl.: F03D 17/00, G01M 5/00, F16B 37/14

(54) **VORRICHTUNG, SYSTEM UND VERFAHREN ZUR ÜBERWACHUNG EINER FLANSCHVERBINDUNG EINER WINDENERGIEANLAGE**
APPARATUS, SYSTEM AND METHOD FOR MONITORING A FLANGE CONNECTION OF A WIND ENERGY INSTALLATION
DISPOSITIF, SYSTÈME ET PROCÉDÉ PERMETTANT DE SURVEILLER UN RACCORD À BRIDES D'UNE ÉOLIENNE

(30) Priorität: 19.09.2013 DE 102013218845
(43) Veröffentlichungstag der Anmeldung: 27.07.2016
(73) Patentinhaber: Senvion GmbH, 22297 Hamburg (DE)
(72) Erfinder: HÖR, Oliver, 24796 Bredenbek (DE); RIESBERG, André, 49134 Wallenhorst (DE)
(74) Vertreter: Wallinger Ricker Schlotter Tostmann
(86) Internationale Anmeldenummer: PCT/EP2014/002360
(87) Internationale Veröffentlichungsnummer: WO 2015/039727

(56) Entgegenhaltungen:
- WO-A1-2013/053758
- WO-A2-2010/092426
- US-A- 4 484 132

## Beschreibung

Die Erfindung betrifft eine Vorrichtung, ein System und ein Verfahren zur Überwachung einer, insbesondere dynamisch hochbelasteten, Flanschverbindung einer Windenergieanlage. Die Erfindung betrifft ferner eine Windenergieanlage.

Windenergieanlagen sind hochgradig dynamisch belastete Maschinen mit im Maschinenbau ansonsten nur sehr selten auftretenden Schwingspielzahlen von 10⁹ Lastwechseln. Diese Dynamik führt zu einer sehr starken Materialermüdung. Aus logistischen Gründen können die Hauptkomponenten einer Windenergieanlage allerdings erst auf der Baustelle montiert werden. Dies bedeutet, dass die kompletten Belastungen aus dem Windrotor über lösbare Verbindungen, üblicherweise Flanschverbindungen mit Schraubbolzen, übertragen werden müssen. Die hochbelasteten Flanschverbindungen umfassen die Turmflansche, das Turmkopflager, die Auflager von Welle und Getriebe, die Verbindung von Rotorwelle und Rotornabe sowie die Verbindung der Rotorblätter über die Blattlager mit der Rotornabe. Diese Flanschverbindungen weisen unvermeidliche Schwachstellen in Form von Bolzenlöchern auf.

Beispielsweise stellen Rotorblattlager die blattwurzelseitigen Befestigungen der Rotorblätter an der Rotornabe dar. Diese Bauteile sind im Betrieb der Windenergieanlage hochbelastet und können im Schadensfall zu schwerwiegenden Problemen bis zum Rotorblattabwurf führen.

Eine typische Bauform von Rotorblattlagern weist zwei über Wälzkörper drehbar miteinander verbundene Lagerringe auf, die jeweils mit Bohrlöchern zur Aufnahme von Verbindungsbolzen bzw. Rotorblattanschlussbolzen versehen sind. Diese Bohrlöcher sind gleichzeitig Schwachstellen der Rotorblattlager.

Die Inspektion von Rotorblattlagern ist aufgrund ihrer mangelnden Zugänglichkeit besonders aufwendig und nur eingeschränkt möglich. Risse im Rotorblattlager sind daher nur schwierig, wenn überhaupt, feststellbar, bevor sie zu einem Versagen des Rotorblattlagers führen. Ähnliches gilt auch für andere Flanschverbindungen von Windenergieanlagen.

US 4,484,132 A offenbart ein Detektionssystem für Risse und Brüche mit einem elektrisch isolierenden Substrat, in dem kleine elektrisch leitende Partikel eingebettet sind, die miteinander im elektrischen Kontakt sind. Solange das Substrat ein Elastomer ist, wird es auf ein zu überwachendes Objekt aufgetragen und härtet anschließend aus und ist danach fähig zu brechen oder zu reißen, falls sich das überwachte Objekt deformiert. Bei einem Riss oder Bruch werden die Leiterbahnen der elektrisch leitenden Partikel unterbrochen. WO 2013/053758 A1 offenbart eine Mutternkappe mit einem Sensor.

Daher liegt der vorliegenden Erfindung die Aufgabe zugrunde, eine Überwachung einer, insbesondere dynamisch hochbelasteten, Flanschverbindung, insbesondere eines Rotorblattlagers, einer Windenergieanlage zu vereinfachen, wobei die Überwachung kostengünstig und im laufenden Betrieb erfolgen soll.

Die der Erfindung zugrunde liegende Aufgabe wird durch eine Vorrichtung gemäß Anspruch 1 gelöst.

Eine Grundidee dieses erfinderischen Konzeptes ist es, gerissene Bolzenmuttern oder Bolzenköpfe als Indikatoren für Risse in der Flanschverbindung bzw. im Lager zu verwenden. Ein Riss im Rotorblattlager führt beispielsweise dazu, dass der Rotorblattbolzen und die darauf festgeschraubte Mutter bei einem Lagerriss überproportional belastet werden und daher dieses zu einem Riss in der Blattmutter oder gegebenenfalls einem Bolzenkopf führt. Es kann auch vorkommen, dass die Blattmutter vom Rotorbolzen gestreift wird. Entsprechendes gilt auch für andere versagende Flanschverbindun gen von Windenergieanlagen.

Im Rahmen der Erfindung werden unter Bolzen, Bolzenköpfen und den entsprechenden Muttern daher jeweils Rotorblattbolzen bzw. Rotorblattlagerbolzen und deren Köpfe oder Muttern, sowie Bolzen, Bolzenköpfe und Bolzenmuttern anderer Flanschverbindungen von Windenergieanlagen synonym verstanden.

Der Bolzenkopf oder die Bolzenmutter werden als Indikator für Risse im Lager in der Flanschverbindung bzw. erfindungsgemäß durch eine Art "Mutternkappe" überwacht, so dass es etwa möglich wird, eine automatische Anlagenabschaltung einzuleiten, wenn ein kritischer Lagerriss auftritt, der im Falle des Rotorblattlagers im schlimmsten Fall zum Blattabwurf führen könnte.

Diese "Kappe" ist als Überwachungskörper ausgebildet, der auf den Bolzenkopf oder die Bolzenmutter montierbar ist. Im einfachsten Fall wird der Überwachungskörper auf den Bolzen aufgesteckt. Ein Sensor überwacht bzw. stellt die strukturelle Integrität des Überwachungskörpers fest. Reißt die überwachte Mutter oder der überwachte Bolzenkopf, dann wird auch der Überwachungskörper zerstört. Diese Zerstörung wird von dem Sensor festgestellt und dient zur Signalisierung einer Beschädigung der Flanschverbindung, insbesondere des Lagers. Die Blattmutter reißt, wenn sie bei Lagerversagen vom Bolzen abgestreift wird. Dieses Ereignis führt zur Beschädigung des Überwachungskörpers.

Damit bietet das System eine automatische, simple, robuste, kostengünstige und leicht nachrüstbare Möglichkeit, die Bolzenmuttern bzw. Bolzenköpfe, und damit auch das Lager und die Flanschverbindung, auf Beschädigungen, insbesondere Risse, zu überwachen.

Vorzugsweise ist der Überwachungskörper als Kunststoffformteil ausgebildet. Der Überwachungskörper weist vorteilhafterweise an einer oder mehreren Ecken der zentralen Aufnahme und/oder an einer oder mehreren Kanten der zentralen Aufnahme, Sollbruchstellen auf, die insbesondere als Stellen mit verminderter Materialstärke ausgebildet sind. Ein geeignetes Material ist hierfür beispielsweise das Polyamid PA 2200 Feinpulver, das es ermöglicht, den Überwachungskörper in einem Lasersinterverfahren zu fertigen. So ist es möglich, in sehr kurzer Zeit die Überwachungskörper zu fertigen. Größere Stückzahlen werden bevorzugt im weit verbreiteten Spritzgussverfahren kostengünstig produziert.

Die Sollbruchstellen stellen sicher, dass der Überwachungskörper zuverlässig und sauber bricht, wenn das Bauteil, auf das der Überwachungskörper aufgesetzt ist, reißt. Das Material sollte eine Mischung aus einer ausreichenden Elastizität zur beschädigungsfreien Montage auf das zu überwachende Bauteil und eine ausreichende Sprödigkeit zur Sicherstellung einer Beschädigung bei einer Beschädigung des zu überwachenden Bauteils aufweisen. Hierzu sind viele Kunststoffe geeignet.

Der Überwachungskörper weist vorteilhafterweise für die üblicherweise sechseckigen Muttern und sechseckigen Bolzenköpfe eine sechseckige Öffnung auf und ist über die Mutter bzw. den Bolzenkopf schiebbar. Die Öffnung kann minimal größer sein als die eigentliche Mutter. Das Material und die Öffnung sollten so gewählt sein, dass der Spalt über den gesamten Temperaturbereich des Betriebs der Windenergieanlage ausreichend groß ist und es nicht zu einem Riss des Überwachungskörpers aufgrund unterschiedlicher Ausdehnungskoeffizienten von Stahl und Kunststoff kommt.

Um ein definiertes Rissverhalten des Überwachungskörpers zu erhalten, können beispielsweise die sechs Ecken der sechseckigen Öffnung mit einer Aussparung versehen sein und so Bruchstellen bilden. Alternativ oder zusätzlich können auch die sechs Kanten mit Sollbruchstellen versehen sein. Um die Gefahr eines Einreißens der Sollbruchstellen beispielsweise bei Montage oder durch Vibrationen zu verringern, kann im unteren Bereich ein Kragen oder Steg zur Stabilisierung vorgesehen sein. Dieser Kragen oder Steg kann gleichzeitig als Auflagefläche für den Überwachungskörper auf dem Flansch, beispielsweise Rotorblattlager, dienen.

Die Höhe der Aussparung des Überwachungskörpers kann die gesamte Höhe einer Mutter betragen, jedoch auch kleiner sein als die Höhe der zu überwachenden Mutter.

Der Überwachungskörper weist vorzugsweise eine Fixiereinrichtung zur, insbesondere lösbaren, axialen Fixierung auf einem Bolzenkopf oder einer Bolzenmutter auf, wobei insbesondere die Fixiereinrichtung wenigstens ein zum Eingriff in ein Außengewinde eines Bolzens ausgebildetes Fixierelement aufweist, das federnd ausgeführt ist und/oder mittels eines Feststellungsmittels, insbesondere einen Sprengring oder einen Kabelbinder, feststellbar ist. Mittels der Fixiereinrichtung wird der Überwachungskörper auf den Bolzen zentriert und auf ihm axial festgesetzt. Auf diese Weise wird sichergestellt, dass der Überwachungskörper nicht von dem zu überwachenden Bolzenteil, also dem Bolzenkopf oder der Bolzenmutter abrutscht. Dieses Fixierelement bietet außerdem eine weitere Möglichkeit, ein Abstreifen der Mutter vom Bolzen zu überwachen, da die Fixierung hierbei zerstört wird. Der Sensor kann damit vorzugsweise auch das Fixierelement überwachen.

Der Sensor weist vorzugsweise wenigstens einen die zentrale Aufnahme wenigstens im Wesentlichen ein- oder mehrmals umrundenden elektrischen Leiter auf, der insbesondere als Draht, als elektrisch leitende Faser oder als elektrisch leitende Beschichtung am Überwachungskörper ausgebildet ist. Dies bedeutet, dass der Sensor einen elektrischen Leiter aufweist, der bei einem Schadensfall des überwachten Bauteils zusammen mit dem Überwachungskörper reißt. Dadurch wird die elektrische Leitfähigkeit des elektrischen Leiters unterbrochen. Diese Unterbrechung erlaubt es, die Beschädigung des überwachen Bauteils, also beispielsweise der Bolzenmutter, unmittelbar festzustellen. Alternativ oder zusätzlich kann der Sensor im Rahmen der Erfindung auch als optischer, induktiver, kapazitiver oder Körperschallsensor ausgeführt sein, der einen Riss im Überwachungskörper erkennt.

Eine besonders einfache Ausführung des elektrischen Leiters ist eine Spur aus leitfähigem Lack, wie sie bei Computerplatinen eingesetzt wird. Auch dünne Litzen oder elektrisch leitende Fasern, wie beispielsweise Kohlefasern sind hierfür geeignet. Eine besonders kostengünstige Herstellung ergibt sich jedoch mit der Beschichtung mit leitfähigem Lack.

Wenn eine Lackspur als elektrischer Leiter verwendet wird, so kann sie in einer Ausführungsform als Spirale an der Außenseite des Überwachungskörpers aufgebracht sein. Sie kann auch vorzugsweise an der Unterseite oder an der Oberseite eines Steges aufgebracht sein. Die Umrundung der zentralen Aufnahme sollte vorzugsweise wenigstens annähernd 360° umfassen. Eine als Spirale ausgeführte Lackspur kann entweder kontinuierlich ansteigend oder mit einem Versatz an einer Stelle ausgeführt werden. Kontaktstellen zur Anbringung des Kabels liegen in dem Fall vorzugsweise jeweils zwischen zwei Sollbruchstellen.

Ferner ist vorzugsweise eine Beschichtung zum Schutz gegen einfache mechanische Einflüsse, zum Beispiel beim Transport, außerhalb der Lackspur angebracht. Der Grundkörper des Überwachungskörpers sowie Lack- und Schutzschichten sollten thermisch aufeinander abgestimmt sein, damit es über den gesamten Betriebstemperaturbereich nicht zu einem Ablösen oder zu Rissbildungen kommt.

Auch der Übergang von der Lackspur oder dem elektrischen Leiter zum Stecker bzw. Kabel für eine externe Anbindung muss über den gesamten Temperaturbereich und auch bei Schub oder Vibrationen sicher erfolgen. Es kann eine Zugentlastung vorgesehen werden, damit beim Verbinden der einzelnen Vorrichtungen untereinander die Kontaktstelle nicht belastet wird.

Jeder Überwachungskörper jeder Vorrichtung sollte einzeln installierbar sein. Dazu weisen sie jeweils vorzugsweise einen Stecker und eine Buchse auf. Zwischen den einzelnen Überwachungskörpern sind separate Verbindungskörper vorgesehen oder jeder Überwachungskörper ist einseitig mit einem ausreichend langen Kabel versehen.

Stecker und/oder Kabel sind vorzugsweise seitlich des Überwachungskörpers angeordnet, damit die zulässige oder zur Verfügung stehende Gesamthöhe nicht überschritten wird.

Zur Kontaktierung des Sensors ist vorzugsweise wenigstens ein Anschlussstecker umfasst, der mit den Enden des wenigstens einen elektrischen Leiters elektrisch leitend verbunden ist und/oder ein zur drahtlosen Signalübertragung und/oder zum drahtlosen Betrieb und/oder zur drahtlosen Energieversorgung des Sensors ausgebildeter RFID-Chip mit einer eindeutigen Kennung.

Bei Verwendung von RFID-Chips ist eine Verkabelung nicht mehr in jedem Fall notwendig, besonders, wenn der RFID-Chip induktiv mit Strom versorgt wird und ausgebildet ist, Messsignale oder ein Ergebnis einer Leitfähigkeitsprüfung zu übermitteln. Als Ergebnis einer Leitfähigkeitsprüfung ist im Rahmen der vorliegenden Erfindung eine einfache Unterscheidung zwischen "Signal" und "kein Signal" ausreichend.

Wenn keine Signalidentifizierung vorgesehen ist, ist vorzugsweise eine optische Auslösungsanzeige, insbesondere eine Niederstrom-LED, umfasst. So lässt sich bei Stillstand der Windenergieanlage durch den Leuchtzustand der LEDs an den Vorrichtungen schnell die betroffene Mutter bzw. der betroffene Bolzenkopf auffinden.

Die der Erfindung zugrunde liegende Aufgabe wird auch durch ein System zur Überwachung einer, insbesondere dynamisch hochbelasteten, Flanschverbindung einer Windenergieanlage mit einer Mehrzahl von zuvor beschriebenen erfindungsgemäßen Vorrichtungen und einer Auswertungseinrichtung gelöst, die mit der Mehrzahl von Vorrichtungen drahtlos oder drahtgebunden verbunden ist und ausgebildet ist, Signale der Sensoren der Vorrichtungen zu empfangen.

Damit weist das erfindungsgemäße System die gleichen Merkmale, Vorteile und Eigenschaften auf wie die darin enthaltenen Vorrichtungen.

Vorzugsweise sind die Mehrzahl der Vorrichtungen in Reihe oder parallel geschaltet oder es sind mehrere Sensoren in Reihe hintereinander geschaltet und jeder einzelne oder Untergruppen der in Reihe verschalteten Sensoren weist jeweils eine Auslöseanzeige auf. Bei der Bildung von Untergruppen lassen sich bestimmte Bereiche gesammelt überwachen. Als besonders kritischer Bereich hat sich im Falle des Rotorblattlagers beispielsweise der Bereich von mehreren Grad rund um die Blatthinterkante erwiesen. So kann ein Riss in diesem Bereich als schwerwiegender bewertet werden als ein sich anbahnender Riss in einem anderen Bereich, der weniger belastet ist. Dies kann bei der Entscheidung über die Steuerung oder Stillsetzung der Windenergieanlage berücksichtigt werden. Ebenso ist es vorzugsweise möglich, nur in einem als kritisch bekannten Bereich der Flanschverbindung Bolzenmuttern oder -köpfe mit den erfindungsgemäßen Überwachungsvorrichtungen auszustatten, wodurch sich die Kosten für das System bei annähernd gleicher Sicherheit auf einen Bruchteil einer vollständigen Ausstattung aller Bolzen einer Flanschverbindung reduzieren lassen. So wird vorzugsweise nur ein Bereich von kritischen Bolzen im Bereich einer Rotorblatthinterkante überwacht, wenn, insbesondere aus rechnerischen Analysen oder Felderfahrung, bekannt ist, dass nur in diesem Bereich Risse auftreten.

Für Sensoren, die eine externe Energieversorgung benötigen und/oder zur Signalübertragung ist vorzugsweise eine induktive Verbindung oder eine Verbindung über einen Schleifring oder eine, insbesondere mittels einer Schleppkette geschützte, Kabelverbindung von den Sensoren zu einer externen Stromquelle und/oder Auswerteeinheit umfasst. Bei Verwendung von RFID-Chips kann die Stromversorgung entweder über lokale Batterien an der jeweiligen Vorrichtung erfolgen oder induktiv.

Die der Erfindung zugrunde liegende Aufgabe wird auch durch eine Windenergieanlage mit einem zuvor beschriebenen System zur Überwachung einer, insbesondere dynamisch hochbelasteten, Flanschverbindung, insbesondere eines Rotorblattlagers, gelöst.

Schließlich wird die der Erfindung zugrunde liegende Aufgabe durch ein Verfahren zum Überwachen einer, insbesondere dynamisch hochbelasteten, Flanschverbindung, insbesondere eines Rotorblattlagers, einer Windenergieanlage gelöst, das sich durch die Merkmale des Anspruchs 12 auszeichnet.

Unter einem Signalisieren wird im Rahmen der Erfindung eine Anzeige auf einer Bedienkonsole, beispielsweise einer Fernwartung verstanden, ebenso wie eine direkte Rückkopplung an einer automatischen Steuereinrichtung der Windenergieanlage. Vorzugsweise wird bei Signalisierung einer Beschädigung der Flanschverbindung die Windenergieanlage stillgesetzt.

In einer bevorzugten Variante werden mehrere Sensoren mehrerer Vorrichtungen in Reihe betrieben oder in Gruppen gruppiert. Eine Reinschaltung reduziert den technischen Aufwand, während die Gruppierung von reihengeschalteten Sensoren eine Lokalisation bei ebenfalls verringertem technischem Aufwand ermöglicht.

Die Überwachung erfolgt vorzugsweise kontinuierlich oder in diskreten Zeitintervallen. Bei einer kontinuierlichen Überwachung ist ein Schaden am Rotorblattlager, der sich auf einen Bolzen bzw. die Bolzenmutter oder den Bolzenkopf auswirkt, sofort erkennbar. Beispielsweise im Falle von induktiv betriebenen RFID-Chips kann aber auch eine diskontinuierliche Überwachung in regelmäßigen Abständen erfolgen.

Zur Signalisierung eines Schadens ist vorzugsweise vorgesehen, dass ein Sensor bei Beschädigung oder Zerstörung eines Überwachungskörpers ein Signal aussendet oder alternativ eine Beschädigung festgestellt wird, wenn ein kontinuierlich anstehendes Signal unterbrochen wird (sog. "fail safe") oder ein Sensor aufgrund einer Unterbrechung seines elektrischen Leiters bei einer Überwachung nicht erkannt wird. Dieser letztgenannte Fall ist beispielsweise der Fall bei einer drahtlosen Überwachung, bei der beispielsweise RFID-Chips induktiv bestromt werden und im Falle eines strukturell intakten Überwachungskörpers eine Antwort ausschicken, die zentral empfangen wird. Wenn ein Überwachungskörper aufgrund eines Schadens des überwachten Bauteils strukturell nicht mehr intakt ist und somit der elektrische Leiter unterbrochen ist, kann dieser Sensor und RFID-Chip keine Antwort mehr schicken.

Ein erfindungsgemäßes System zur Überwachung von beispielsweise Rotorblättern ist insbesondere zur Nachrüstung auf bestehenden Windenergieanlagen vorgesehen. Hierzu ist eine kabellose Ausführung mit RFID-Signalübertragung besonders geeignet, weil keine aufwändige Signalübertragung über zwei drehende Achsen von dem bewegten Blattlagerring in das Maschinenhaus über Schleifringe und/oder Schleppkette aufgebaut werden muss. Es sind lediglich die Überwachungskörper auf die Blattbolzen aufzustecken sowie eine RFID-Sende- und Empfangseinheit in der drehenden Rotornabe oder dem Maschinenhaus in der Nähe der Blattlager zu installieren. Im einfachsten Fall nutzt die Sende- und Empfangseinheit einen bestehenden, bevorzugt digitalen Eingang in die Steuerung der Windenergieanlage zur Übermittlung eines Signals für einen Schaden. Die alternative Installation einer Schleppkette in den beengten Platzverhältnissen an den Blattlagern erfordert einen erheblichen konstruktiven Aufwand und sorgfältiges Arbeiten bei der Installation, weist aber den Vorteil einer hohen Zuverlässigkeit in der Signalübertragung auf.

Die Erfindung wird besonders bevorzugt zur Überwachung von als Flanschverbindung ausgeführten Wälzlagern, insbesondere Blattlagern oder Azimutlagern, eingesetzt. Im Vergleich zu üblichen Systemen zur Überwachung von Wälzlagern weisen das erfindungsgemäße System und die Vorrichtung den Vorteil der Einfachheit auf. Dem liegt die Erkenntnis zugrunde, dass der überwiegende Teil der Fälle eines Totalversagens beispielsweise eines Blatt- oder Azimutlagers zunächst zu einer Rissbildung durch ein Bolzenloch an einem der Lagerringe führt, welches mit geringem Zeitverzug zu einem Aufsprengen der Bolzenmutter/des Bolzenkopf führt. Dies wird sicher durch die Erfindung erkannt. Dabei ist die Zeit zwischen dem Versagen der Bolzenmutter oder des Bolzenkopf und dem Totalversagen des Wälzlagers ausreichend groß, um ein sicheres Abfahren der Windenergieanlage nach Schadenserkennung zu ermöglichen. Besonders bevorzugt erfolgt das Abfahren mit einer gegenüber einem Notaus reduzierten Abfahrgeschwindigkeit, um die beschädigten Komponenten zu schonen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Maschinenhauses einer Windenergieanlage,
- Fig. 2a) bis c): ein erstes Ausführungsbeispiel einer erfindungsgemäßen Vorrichtung,
- Fig. 3a) bis c): Detailansichten der Vorrichtung aus Fig. 2,
- Fig. 4a, b): schematische Darstellung eines zweiten Ausführungsbeispiels einer erfindungsgemäßen Vorrichtung,
- Fig. 5a) bis c): schematische Darstellung eines dritten Ausführungsbeispiels einer erfindungsgemäßen Vorrichtung,
- Fig. 6a) bis d): schematische Darstellung eines vierten Ausführungsbeispiels einer erfindungsgemäßen Vorrichtung,
- Fig. 7a), b): Ausschnitte eines erfindungsgemäßen Systems.

In den Zeichnungen sind jeweils gleiche oder gleichartige Elemente und/oder Teile mit denselben Bezugsziffern versehen, so dass von einer erneuten Vorstellung jeweils abgesehen wird.

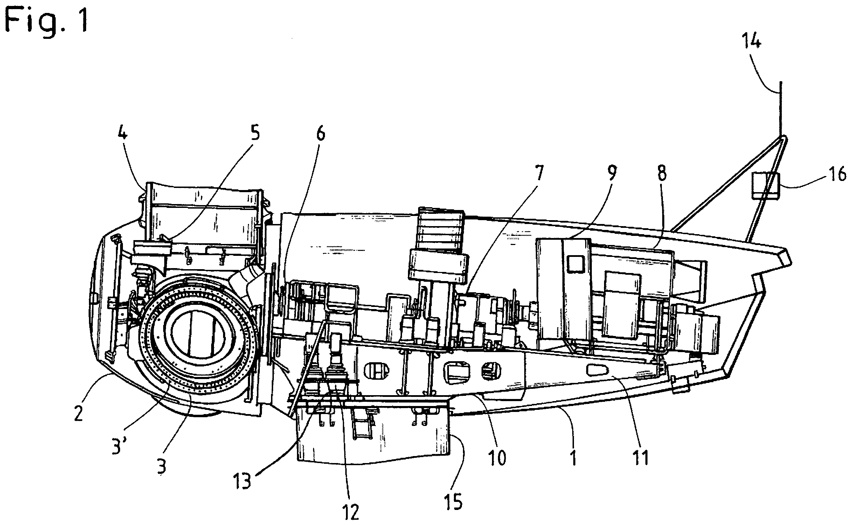

In Fig. 1 ist ein Maschinenhaus 1 bzw. eine Gondel einer Windenergieanlage schematisch von der Seite dargestellt. An das Maschinenhaus 1 schließt sich eine Rotornabe 2 mit drei Rotorblattanschlüssen mit Rotorblattlagern 3 für Rotorblätter 4 an. Ein Rotorblatt 4 ist mit seinem blattwurzelseitigen Ende ebenfalls dargestellt. Die Rotorblattanschlüsse weisen jeweils Flansche zum Anschluss eines Rotorblatts 4 und Blattwinkelverstellvorrichtungen zur Einstellung und Feststellung des Rotorblattwinkels auf. Ein am Flansch montiertes und mit einer Verkleidung abgedecktes Rotorblattlager ist mit dem Bezugszeichen 5 versehen. Zur Verschraubung eines Rotorblatts 4 am Rotorblattlager 3 weisen die Rotorblattlager 3 umlaufend eine Vielzahl von Bohrungen 3' zur Aufnahme von Schraubbolzen bzw. Rotorblattbolzen auf.

Innerhalb des Maschinenhauses 1 schließt sich an die Rotornabe 2 eine Lagerung 6 einer langsamen Rotorwelle an, die direkt mit der Rotornabe 2 verbunden ist. Die langsame Welle ist mit einem Getriebe 7 verbunden, mit dem die Drehzahl der langsamen Rotorwelle heraufgesetzt und auf eine schnelle Welle übertragen wird. Die schnelle Welle, die sich an das Getriebe 7 anschließt, führt zu einem Generator 8, der am heckseitigen Ende der Gondel 1 angeordnet ist. Ebenfalls dargestellt ist eine elektronische Steuervorrichtung 9 mit einem Umrichter, der den durch den Generator 8 erzeugten elektrischen Strom so anpasst, dass er in ein privates oder öffentliches Stromnetz eingespeist werden kann.

Im unteren Bereich des Maschinenhauses 1 ist ein Maschinenträger mit einem Hauptträger 10 und einem Heckträger 11 dargestellt. Der Hauptträger 10 unterstützt die Lagerung 6 der langsamen Welle sowie die Rotornabe 2 und das Getriebe 7. Der Heckträger 11 trägt elektrische Komponenten wie den Generator 8, Steuerungs- und Schaltschränke sowie gegebenenfalls einen Transformator und den Umrichter.

Zur azimutalen Drehung, das heißt zur Drehung des Maschinenhauses 1 auf der Längsachse des Turms 15, sind am Hauptträger 10 mehrere, üblicherweise zwischen vier und sechzehn Azimutantriebe 12 angeordnet, die über ein Zahnrad und Zahnkranzgetriebe das Maschinenhaus 1 auf dem Turm 15 drehen. Außerdem sind dazu benachbart Azimutbremsen 13 ausgebildet, die die Azimutantriebe 12 entlasten. Sie halten das Maschinenhaus 1 in einer festen azimutalen Position, sobald eine Azimutsollposition eingenommen ist. Während einer Azimutverstellung werden sie mit einem Restdruck beaufschlagt, um die Azimutantriebe 12 von äußeren Einflüssen zu entkoppeln.

Das Maschinenhaus 1 verfügt an seinem heckseitigen Ende außerdem über Windsensorik, beispielsweise ein Anemometer 16, und einen Blitzschutz 14. Ein weiterer, nicht dargestellter Blitzschutz ist üblicherweise im Bereich des Übergangs zwischen dem Maschinenhaus 1 und der Rotornabe 2 angeordnet, um Blitzeinschläge aus dem Rotorblatt 4 in den Turm 15 abzuleiten.

In den folgenden Figuren wird die Erfindung anhand eines als Flanschverbindung ausgebildeten Rotorblattlagers erklärt. Diese Ausführungen sind ohne weiteres auf eine sehr vorteilhafte Überwachung eines zwischen dem Turmkopf und dem Maschinenhaus angeordneten Azimutlagers übertragbar, welches in Funktion und Aufbau einem Blattlager sehr ähnlich ist.

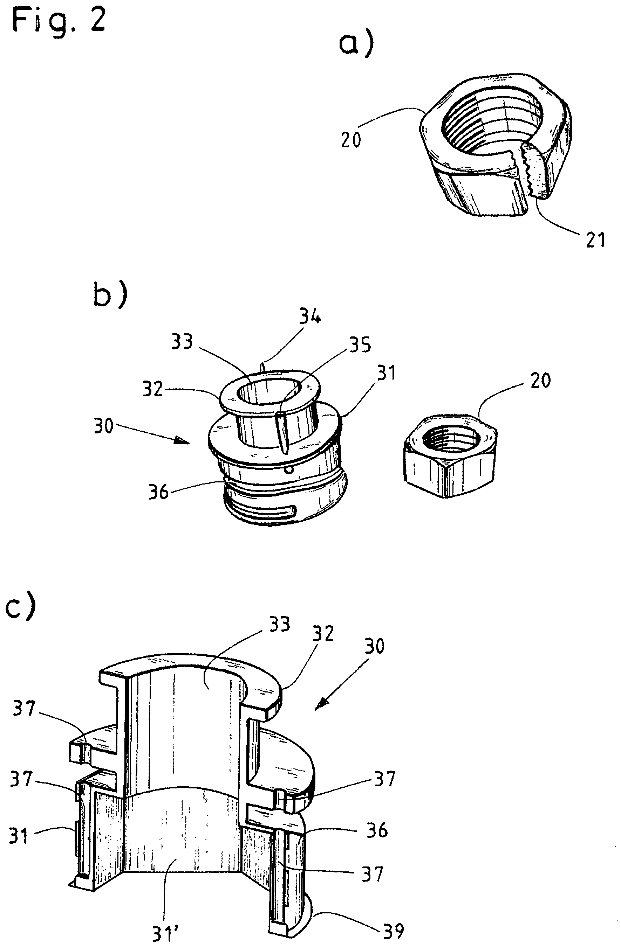

In Fig. 2a) ist eine Bolzenmutter 20 dargestellt, die aufgrund einer Beschädigung eines Rotorblattlagers 3 beschädigt ist und einen Riss 21 aufweist. Dabei hat sich das Volumen bzw. der Umfang der Bolzenmutter 20 vergrößert.

In Fig. 2b) ist ein erstes Ausführungsbeispiel eines erfindungsgemäßen Überwachungskörpers 30 dargestellt, der auf eine strukturell intakte Schraubenmutter 20 aufsetzbar ist. Der Überwachungskörper 30 weist einen unteren Teil, nämlich eine Mutternaufnahme 31' auf, sowie ein oberes Bolzenaufnahmeteil 32, das eine zentrale Bolzenaufnahme 33 als Öffnung aufweist. Am Umfang des Mutternaufsatzes 31 ist ein elektrischer Leiter in Form einer spiralförmigen elektrisch leitenden Beschichtung angebracht. Diese ist an ihren beiden Enden mittels Kontaktstiften 34, 35 kontaktiert, die ihrerseits wiederum mit einer Auswertevorrichtung oder mit weiteren Sensoren verbunden werden können.

In Fig. 2c) ist eine Querschnittsdarstellung durch einen entsprechenden Überwachungskörper 30 schematisch dargestellt, bei dem die sechseckige Mutternaufnahme 31' erkennbar ist. Diese ist an die Form der zu überwachenden Mutter oder des zu überwachenden Bolzenkopfes angepasst und so ausgelegt, dass normale thermische Größenveränderungen des überwachten Bauteils nicht zu einer Beschädigung des Überwachungskörpers 30 führen. In dem Mutternaufsatz 31 ist an 2 Seiten jeweils ein Hohlraum 37 zur Durchführung der Kontaktstifte 35, 35 aus Fig. 2b) vorgesehen, die zusätzlich als Sollbruchstellen wirken. Die Kontaktstifte 34, 35 sind leitend mit der Beschichtung, also dem elektrischen Leiter 36, verbunden. An der Unterseite ist ein Steg 39 umlaufend zur Stabilisierung und zur Abstützung auf dem Rotorblattlager 3 angeordnet.

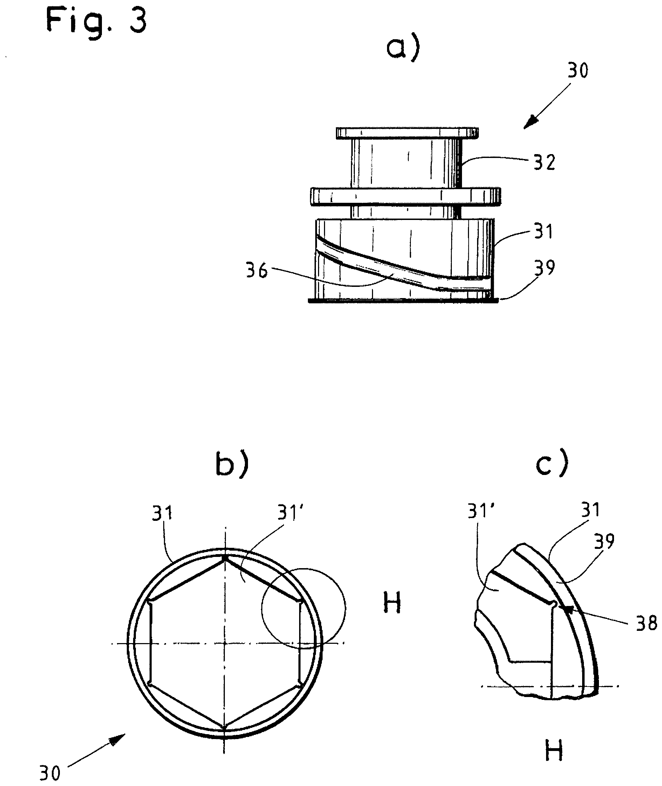

Fig. 3 zeigt schematische Darstellungen des Überwachungskörpers 30 aus Fig. 2. In Fig. 3a) ist eine Seitenansicht gezeigt, in der besonders die spiralförmige Anordnung des elektrischen Leiters 36 dargestellt ist. Fig. 3b) zeigt eine Ansicht von unten, aus der die sechseckige Form der Mutternaufnahme 31' hervorgeht. Mit "H" ist ein Detail gekennzeichnet, das in Fig. 3c) vergrößert dargestellt ist. Es ist zu sehen, dass mittels einer Nut in der Ecke zwischen zwei Wänden die Materialstärke weiter verdünnt ist, so dass eine Sollbruchstelle 38 entsteht. Damit nicht bereits bei der Montage oder bei normalen Vibrationen ein Riss entsteht, ist dieser Bereich vollumfänglich durch einen Steg 39 verstärkt.

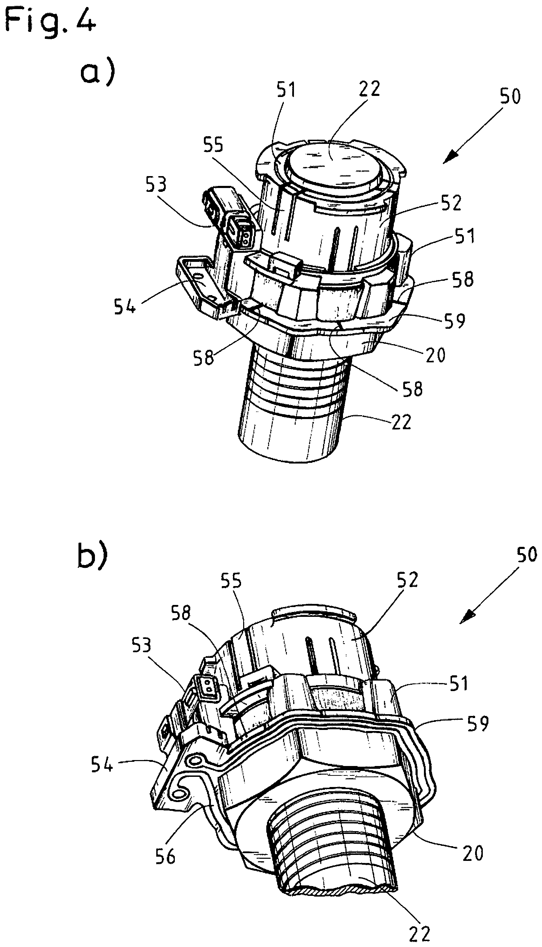

Fig. 4 zeigt ein zweites Ausführungsbeispiel einer erfindungsgemäßen Vorrichtung, in Fig. 4a) von einer perspektivisch oberen Ansicht und in Fig. 4b) perspektivisch schräg von unten.

Auf einem Bolzen 22 sitzt eine Bolzenmutter 20 auf. Auf die Bolzenmutter 20 ist ein Überwachungskörper 50 geschoben, dessen Mutternaufsatz 51 die Bolzenmutter 20 teilweise aufnimmt. Der Mutternaufsatz 51 weist mehrere Fenster bzw. Öffnungen auf und ist nur an den Ecken der sechseckigen Form massiv ausgestaltet. Ein umlaufender Steg 59 schließt den Mutternaufsatz 51 nach unten ab. Die Wandstärke des Steges 59 ist jeweils im Zentrum der Seitenflächen der Mutter 20 durch eine Kerbe geschwächt, so dass insgesamt sechs Sollbruchstellen 58 dort realisiert sind. Die Fenster dienen der Materialersparnis und strukturellen Schwächung des Überwachungskörpers 50.

Der Mutternaufsatz 51 setzt sich am Bolzen 20 nach oben hin fort und weist dort Elemente auf, die in die Gewindestruktur des Bolzens 22 eingreifen. Auf diesen oberen Teil ist ein Bolzenbefestigungsteil 52 aufgesetzt, der auf den oberen Teil des Mutternaufsatzes 51 einen Druck ausübt, so dass der Mutternaufsatz 51 axial auf der Bolzenmutter 20 fixiert wird. Hierzu weist das Bolzenbefestigungsteil 52 Federelemente 55 auf.

Für den Einsatz zur Überwachung eines Blattlagers ist es besonders vorteilhaft, wenn der Überwachungskörper eine lösbare axiale Fixiereinrichtung aufweist, um einerseits eine absolut sichere Fixierung bei den Bewegungen um die Turm-, Rotor- und Blattachse bereitzustellen, andererseits aber auch eine schnelle Demontage zu ermöglichen, falls aus Sicherheitsgründen eine Überprüfung der Schraubenvorspannung bzw. -anzugsmomente erforderlich sein sollte.

Der Mutternaufsatz 51 weist außerdem an einer Seite eine Halterung 54 für eine Kontaktierung und für eine Platine auf sowie einen Stecker 53 zum Anschluss an externe Vorrichtungen.

An der in Fig. 4b) gezeigten Unterseite des Steges 59 ist ein umlaufender elektrischer Leiter 56 in Form einer elektrisch leitenden Beschichtung angeordnet. Lediglich im Bereich einer Ecke der Bolzenmutter 20 umschließt der elektrische Leiter 56 die sechseckige Öffnung nicht durchgehend. Dennoch umschließt der elektrische Leiter 56 die Öffnung im Wesentlichen, da eine Zerstörung des Überwachungskörpers 50 in jedem Fall zu einem Bruch im Bereich einer Sollbruchstelle 58 führt, so dass eine Unterbrechung der elektrischen Leitung 56 sichergestellt ist.

Die in Fig. 4 dargestellte Aufbringung des Leitlackes von unten ist produktionstechnisch einfacher als eine seitliche Aufbringung gemäß Fig. 2 und Fig. 3.

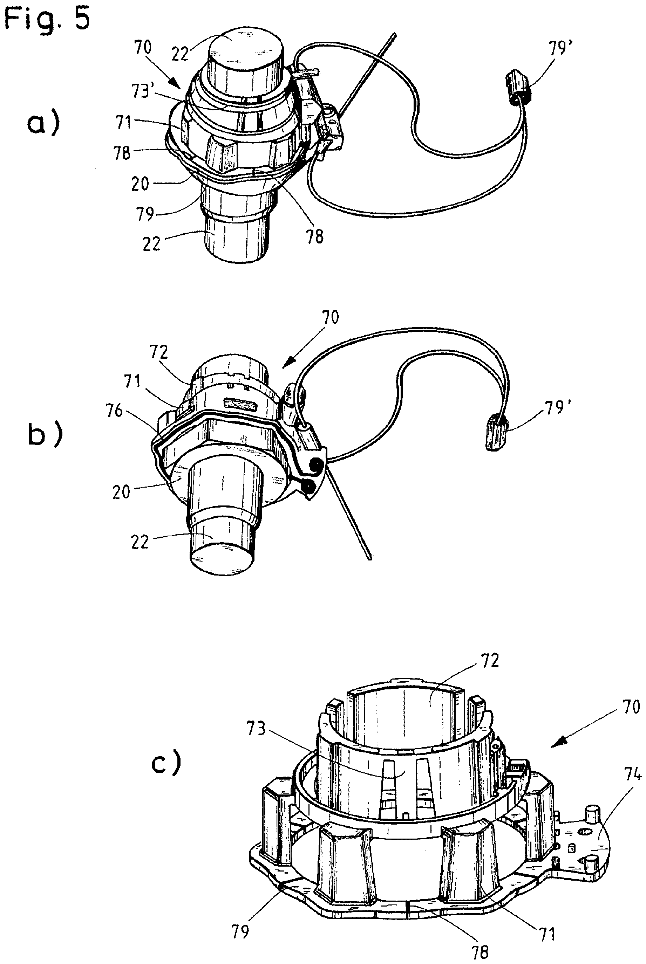

Fig. 5 zeigt ein weiteres Ausführungsbeispiel eines erfindungsgemäßen Überwachungskörpers 70. Fig. 5a) zeigt eine schematische Oberansicht, Fig. 5b) eine schematische perspektivische Unteransicht. Dieser ist einstückig ausgeführt und weist wie der Überwachungskörper 50 aus Fig. 4 Fenster an den Seiten der Aufnahme für die Bolzenmutter 20 auf. Auch der Überwachungskörper 70 weist einen unteren umlaufenden Steg 79 auf mit Sollbruchstellen 78 an den Seitenmitten der Bolzenmutter 20. Der untere Mutternaufsatz 71 geht in ein oberes Bolzenaufnahmeteil 72 über, das durch einen Kabelbinder 73' zusammengehalten wird. Es sind Schlitze vorhanden, die dazu dienen, federnde Elemente auszubilden, die in das Bolzengewinde eingreifen. Außerdem dienen sie dazu, den Kabelbinder 73' wieder durchschneiden zu können.

Es ist auch eine Verkabelung und ein Anschlussstecker 79' dargestellt, die mit entsprechenden Bauteilen weiterer Vorrichtungen verkoppelt werden können.

In Fig. 5b) ist der unten aufgebrachte Leitlack beziehungsweise elektrische Leiter 76 dargestellt. Die Verkabelung ist unvollständig gezeigt. Die zentrale Platine weist eine nicht mit Bezugszeichen versehene LED 99a auf. Diese leuchtet im Schadensfall. Anstelle verkabelter Sensoren können auch RFIDs eingesetzt werden.

In Fig. 5c) ist der Überwachungskörper 70 im Detail dargestellt. Deutlich ist der untere Steg 79 mit den Sollbruchstellen 78 und der Halterung für Kontaktierung der Platine 74 zu erkennen. Ein oberer Ring trägt den Bolzenaufnahmeteil 72 mit federndem Element 73 mit einer Nase zur Fixierung in einem Außengewinde eines Bolzens 22. Weiterhin sind nach außen hin Rückhaltenasen für einen Kabelbinder oder einen Sprengring vorhanden.

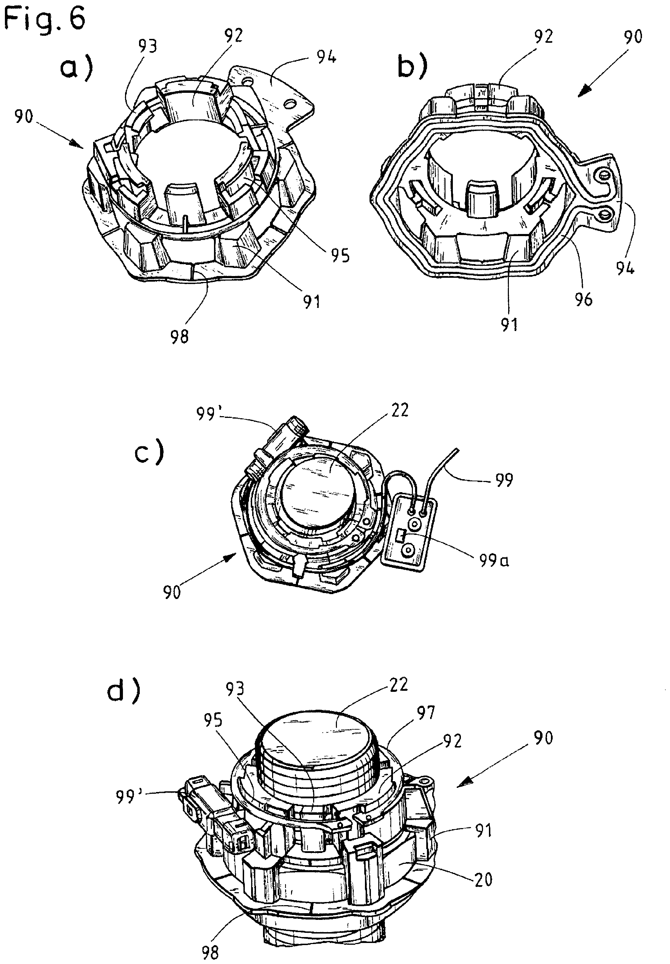

Fig. 6 a) bis d) zeigt ein weiteres Ausführungsbeispiel einer erfindungsgemäßen Vorrichtung. In den Fig. 6a) und 6b) sind obere und untere schematische perspektivische Darstellungen eines Mutternaufsatzes 91 eines Überwachungskörpers 90 dargestellt. Im unteren Bereich entsprechen diese mit umlaufendem Steg sowie Sollbruchstellen 98 auf dem Steg derjenigen aus Fig. 5. Im oberen Bereich weist das Bolzenaufnahmeteil 92 ein Arretierelement 93 mit einer nach innen gewandten Nase und nach außen gewandten Haltestrukturen 95 für einen Sprengring auf. Auch dieser Mutternaufsatz 91 weist eine Halterung 94 für Kontaktierung und Platine auf. An der Unterseite des Steges ist eine ähnliche Beschichtung eines elektrischen Leiters 96 dargestellt, wie in Fig. 5.

Die Fig. 6c) und 6d) zeigen den Überwachungskörper 90 am Bolzen 22 und mit Sprengring 97. Ebenfalls dargestellt sind ein Anschlussstecker 99' sowie eine Platine mit einer Niederstrom-LED 99a und einer Verkabelung 99.

Die LED 99a dient dazu, beschädigte Bolzenmuttern 20 zu lokalisieren.

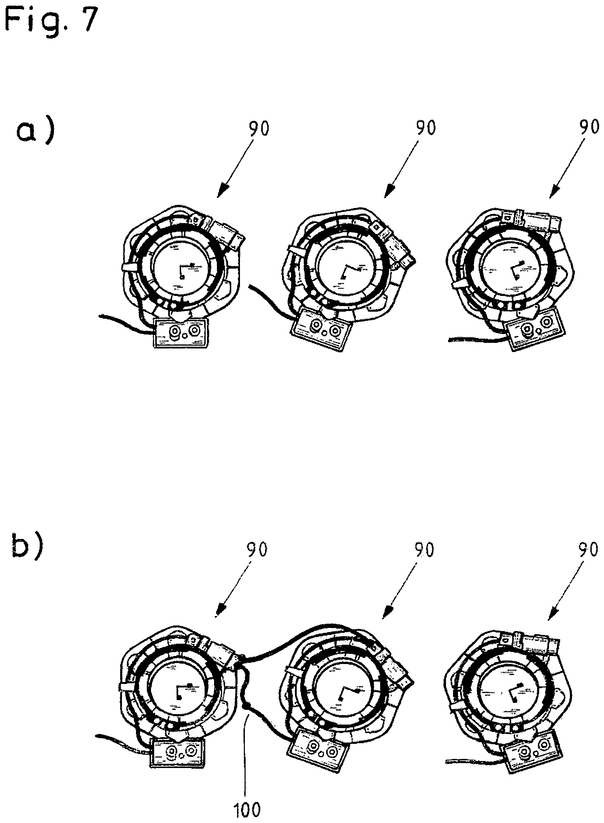

Fig. 7a) zeigt drei erfindungsgemäße Vorrichtungen mit Überwachungskörper 90 und Sensor, noch ohne vollständige Verkabelung, während in Fig. 7b) der linke und der mittlere Sensor miteinander in Reihe verkabelt sind, so dass eine Reihenschaltung 100 der Sensoren verwirklicht ist. Der dritte Sensor wird entweder wiederum in Reihe geschaltet oder mit einer Gruppe nicht dargestellter weiterer Sensoren ebenfalls in einer Reihenschaltung gruppiert.

Im Rahmen der Erfindung sind Merkmale, die mit "insbesondere" oder "vorzugsweise" gekennzeichnet sind, als fakultative Merkmale zu verstehen.

### Bezuqszeichenliste

- 1: Maschinenhaus
- 2: Rotornabe
- 3: Rotorblattlager
- 3': Bohrung
- 4: Rotorblatt
- 5: Flansch
- 6: Lagerung der langsamen Rotorwelle
- 7: Getriebe
- 8: Generator
- 9: Steuerelektronik mit Umrichter
- 10: Hauptträger
- 11: Heckträger
- 12: Azimutantrieb
- 13: Azimutbremse
- 14: Blitzschutz
- 15: Turm
- 16: Anemometer
- 20: Bolzenmutter
- 21: Riss
- 22: Bolzen
- 30: Überwachungskörper
- 31: Mutternaufsatz
- 31': Mutternaufnahme
- 32: Bolzenaufnahmeteil
- 33: Zentrale Bolzenaufnahme
- 34, 35: Kontaktstifte
- 36: elektrischer Leiter
- 37: Hohlraum
- 38: Sollbruchstelle
- 39: Steg
- 50: Überwachungskörper
- 51: Mutternaufsatz
- 52: Bolzenbefestigungsteil
- 53: Stecker
- 54: Halterung für Kontaktierung und Platine
- 55: Federelement
- 56: elektrischer Leiter
- 58: Sollbruchstelle
- 59: Steg
- 70: Überwachungskörper
- 71: Mutternaufsatz
- 72: Bolzenaufnahmeteil
- 73: federndes Element
- 73': Kabelbinder
- 74: Halterung für Kontaktierung und Platine
- 76: elektrischer Leiter
- 78: Sollbruchstelle
- 79: Steg
- 79': Verkabelung und Anschlussstecker
- 90: Überwachungskörper
- 91: Mutternaufsatz
- 92: Bolzenaufnahmeteil
- 93: Arretierelement
- 94: Halterung für Kontaktierung und Platine
- 95: Haltestruktur
- 96: elektrischer Leiter
- 97: Sprengring
- 98: Sollbruchstelle
- 99: Verkabelung
- 99a: LED
- 99': Anschlussstecker
- 100: Reihenschaltung

## Patentansprüche

1. Vorrichtung zur Überwachung einer, insbesondere dynamisch hochbelasteten, Flanschverbindung einer Windenergieanlage mit einem in form- und/oder kraftschlüssiger Anlage auf einen Bolzenkopf oder eine Bolzenmutter (20) eines Bolzens (22) montierbaren als Mutternkappe ausgebildeten Überwachungskörper (30, 50, 70, 90) mit einer zentralen Aufnahme (33) für den Bolzenkopf oder die Bolzenmutter (20), wobei der Überwachungskörper (30, 50, 70, 90) ausgebildet ist, bei einer Beschädigung oder Zerstörung eines oder einer in der zentralen Aufnahme (33) angeordneten Bolzenkopfes oder Bolzenmutter (20) beschädigt zu werden, und einem am Überwachungskörper (30, 50, 70, 90) angeordneten Sensor, der zur Feststellung einer strukturellen Integrität des Überwachungskörpers (30, 50, 70, 90) ausgebildet ist, wobei der Überwachungskörper an einer oder mehreren Ecken der zentralen Aufnahme und/oder an einer oder mehreren Kanten der zentralen Aufnahme Sollbruchstellen (38, 58, 78, 98) aufweist und/oder der Sensor wenigstens einen die zentrale Aufnahme wenigstens im Wesentlichen ein- oder mehrmals umrundenden elektrischen Leiter (36, 56, 76, 96) aufweist.

2. Vorrichtung nach Anspruch 1, **dadurch gekennzeichnet, dass** der Überwachungskörper (30, 50, 70, 90) als Kunststoffformteil ausgebildet ist, der die Sollbruchstellen (38, 58, 78, 98) aufweist, die insbesondere als Stellen mit verminderter Materialstärke ausgebildet sind.

3. Vorrichtung nach Anspruch 1 oder 2, **dadurch gekennzeichnet, dass** der Überwachungskörper (30, 50, 70, 90) eine Fixiereinrichtung zur, insbesondere lösbaren, axialen Fixierung auf einem Bolzenkopf oder einer Bolzenmutter (20) aufweist, wobei insbesondere die Fixiereinrichtung wenigstens ein zum Eingriff in ein Außengewinde eines Bolzens (22) ausgebildetes Fixierelement aufweist, das federnd ausgeführt ist und/oder mittels eines Feststellungsmittels, insbesondere einen Sprengring (97) oder einen Kabelbinder, feststellbar ist.

4. Vorrichtung nach einem der Ansprüche 1 bis 3, **dadurch gekennzeichnet, dass** der Sensor den wenigstens einen die zentrale Aufnahme wenigstens im Wesentlichen ein- oder mehrmals umrundenden elektrischen Leiter (36, 56, 76, 96) aufweist, wobei der elektrische Leiter als Draht, als elektrisch leitende Faser oder als elektrisch leitende Beschichtung am Überwachungskörper (30, 50, 70, 90) ausgebildet ist.

5. Vorrichtung nach Anspruch 4, **dadurch gekennzeichnet, dass** wenigstens ein Anschlussstecker zur Kontaktierung des Sensors umfasst ist, der mit den Enden des wenigstens einen elektrischen Leiters (36, 56, 76, 96) elektrisch leitend verbunden ist und/oder ein zur drahtlosen Signalübertragung und/oder zum drahtlosen Betrieb und/oder zur drahtlosen Energieversorgung des Sensors ausgebildeter RFID-Chip mit einer eindeutigen Kennung umfasst ist.

6. Vorrichtung nach einem der Ansprüche 1 bis 5, **dadurch gekennzeichnet, dass** eine optische Auslösungsanzeige, insbesondere eine Niederstrom-LED (99a), umfasst ist.

7. System zur Überwachung einer, insbesondere dynamisch hochbelasteten, Flanschverbindung einer Windenergieanlage mit einer Mehrzahl von Vorrichtungen nach einem der Ansprüche 1 bis 6 und einer Auswertungseinrichtung, die mit der Mehrzahl von Vorrichtungen drahtlos oder drahtgebunden verbunden ist und ausgebildet ist, Signale der Sensoren der Vorrichtungen zu empfangen.

8. System nach Anspruch 7, **dadurch gekennzeichnet, dass** die Mehrzahl der Vorrichtungen in Reihe oder parallel geschaltet sind, oder mehrere Sensoren in Reihe hintereinander geschaltet sind und jeder einzelne oder Untergruppen der in Reihe verschalteten Sensoren jeweils eine Auslöseanzeige aufweisen.

9. System nach Anspruch 7 oder 8, **dadurch gekennzeichnet, dass** nur in einem als kritisch bekannten Bereich der Flanschverbindung Bolzenmuttern (20) oder -köpfe mit den Vorrichtungen ausgestattet sind.

10. System nach einem der Ansprüche 7 bis 9, **dadurch gekennzeichnet, dass** für Sensoren, die eine externe Energieversorgung benötigen und/oder zur Signalübertragung eine induktive Verbindung oder eine Verbindung über einen Schleifring oder eine, insbesondere mittels einer Schleppkette geschützte, Kabelverbindung der Sensoren zu einer externen Stromquelle und/oder Auswerteeinheit umfasst ist.

11. Windenergieanlage mit einem System zur Überwachung einer, insbesondere dynamisch hochbelasteten, Flanschverbindung nach einem der Ansprüche 7 bis 10.

12. Verfahren zum Überwachen einer, insbesondere dynamisch hochbelasteten, Flanschverbindung einer Windenergieanlage, wobei ein oder mehrere Überwachungskörper (30, 50, 70, 90), welcher oder welche in form- und/oder kraftschlüssiger Anlage auf einen Bolzenkopf oder eine Bolzenmutter (20) eines Bolzens (22) montierbar und mit einer zentralen Aufnahme (33) für den Bolzenkopf oder die Bolzenmutter (20) in der Weise ausgebildet ist oder sind, um bei einer Beschädigung oder Zerstörung eines oder einer in der zentralen Aufnahme (33) angeordneten Bolzenkopfes oder Bolzenmutter (20) beschädigt zu werden, von Vorrichtungen, welche einen am Überwachungskörper (30, 50, 70, 90) angeordneten Sensor, der zur Feststellung einer strukturellen Integrität des Überwachungskörpers (30, 50, 70, 90) ausgebildet ist, aufweisen und vorzugsweise nach einem der Ansprüche 1 bis 6 ausgebildet sind, auf einen oder mehrere Bolzen (22) wenigstens einer Flanschverbindung einer Windenergieanlage montiert werden und die strukturelle Integrität der Überwachungskörper (30, 50, 70, 90) mittels der Sensoren an den Überwachungskörpern (30, 50, 70, 90) überwacht wird, wobei bei Beschädigung oder Zerstörung eines oder mehrerer Überwachungskörper (30, 50, 70, 90) eine Beschädigung der Flanschverbindung (3) signalisiert wird.

13. Verfahren nach Anspruch 12, **dadurch gekennzeichnet, dass** bei Signalisierung einer Beschädigung der Flanschverbindung die Windenergieanlage stillgesetzt wird.

14. Verfahren nach Anspruch 12 oder 13, **dadurch gekennzeichnet, dass** mehrere Sensoren mehrerer der Vorrichtungen in Reihe betrieben oder in Gruppen gruppiert werden.

15. Verfahren nach einem der Ansprüche 11 bis 14, **dadurch gekennzeichnet, dass** der Sensor eines Überwachungskörpers (30, 50, 70, 90) bei Beschädigung oder Zerstörung des Überwachungskörpers (30, 50, 70, 90) ein Signal aussendet oder eine Beschädigung festgestellt wird, wenn der Sensor eines Überwachungskörpers (30, 50, 70, 90), welcher Sensor wenigstens einen die zentrale Aufnahme wenigstens im Wesentlichen ein- oder mehrmals umrundenden elektrischen Leiter (36, 56, 76, 96) aufweist, welcher elektrischer Leiter insbesondere als Draht, als elektrisch leitende Faser oder als elektrisch leitende Beschichtung am Überwachungskörper ausgebildet ist, aufgrund einer Unterbrechung seines elektrischen Leiters (36, 56, 76, 96) bei einer Überwachung nicht erkannt wird oder ein kontinuierlich anstehendes Signal unterbrochen wird.

## Claims

1. A device for monitoring a flange connection of a wind energy installation, in particular a flange connection of a wind energy installation which is subjected to high dynamic loads, comprising a monitoring body (30, 50, 70, 90) which is constructed as a nut cap and which can be mounted on a bolt head or a bolt nut (20) of a bolt (22) in a positive engagement and / or a force-locking engagement, with a central receptacle (33) for the bolt head or the bolt nut (20), wherein the monitoring body (30, 50, 70, 90) is constructed so as to be damaged in the event of damage to, or destruction of, a bolt head or bolt nut (20) arranged in the central receptacle (33), and a sensor which is arranged on the monitoring body (30, 50, 70, 90), which sensor is constructed so as to determine a structural integrity of the monitoring body (30, 50, 70, 90), wherein the monitoring body comprises calibrated breakaway joints (38, 58, 78, 98) at one or more corners of the central receptacle and / or at one or more edges of the central receptacle and / or wherein the sensor comprises at least one electrical conductor (36, 56, 76, 96) which at least substantially surrounds the central receptacle once or several times.

2. The device in accordance with claim 1, **characterised in that** the monitoring body (30, 50, 70, 90) is constructed as a plastic moulded part which comprises the calibrated breakaway joints (38, 58, 78, 98) which are constructed in particular as places with reduced material thickness.

3. The device in accordance with claim 1 or 2, **characterised in that** the monitoring body (30, 50, 70, 90) comprises a fixing device for axial fixing on a bolt head or a bolt nut (20), in particular in a releasable manner, wherein the fixing device in particular comprises at least one fixing element which is constructed for engagement with an external thread of a bolt (22) and which is of a resilient construction and / or can be locked by means of a locking means, in particular by means of a snap ring (97) or a cable tie.

4. The device in accordance with any one of the claims 1 to 3, **characterised in that** the sensor comprises the at least one electrical conductor (36, 56, 76, 96) which at least substantially surrounds the central receptacle once or several times, wherein the electrical conductor is constructed as a wire, as an electrically conductive fibre or as an electrically conductive coating on the monitoring body (30, 50, 70, 90).

5. The device in accordance with claim 4, **characterised in that** at least one connecting plug for contacting the sensor is provided, which is connected to the ends of the at least one electrical conductor (36, 56, 76, 96) in an electrically conductive manner, and / or an RFID chip with a unique identification and constructed for wireless signal transmission and / or for wireless operation and / or for wireless power supply of the sensor is provided.

6. The device in accordance with any one of the claims 1 to 5, **characterised in that** an optical trigger indicator, in particular a low current LED (99a), is provided.

7. A system for monitoring a flange connection of a wind energy installation, in particular a flange connection of a wind energy installation which is subjected to high dynamic loads, with a plurality of devices in accordance with any one of the claims 1 to 6 and an evaluation device which is connected in a wireless or wired manner to the plurality of devices and is constructed to receive signals from the sensors of the devices.

8. The system in accordance with claim 7, **characterised in that** the plurality of devices are connected in series or in parallel, or that several sensors are connected in series one after the other and each individual sensor or sub-groups of the sensors connected in series each comprises a respective trigger indicator.

9. The system in accordance with claim 7 or 8, **characterised in that** bolt nuts (20) or bolt heads are equipped with the devices only in an area of the flange connection which is known to be critical.

10. The system in accordance with any one of the claims 7 to 9, **characterised in that** for sensors which require an external power supply and / or for signal transmission, an inductive connection or a connection via a slip ring or a cable connection of the sensors to an external power source and / or evaluation unit, in particular a cable connection which is protected by means of a drag chain, is provided.

11. A wind energy installation comprising a system for monitoring a flange connection, in particular a flange connection which is subjected to high dynamic loads, in accordance with any one of the claims 7 to 10.

12. A method of monitoring a flange connection of a wind energy installation, in particular a flange connection of a wind energy installation which is subjected to high dynamic loads, wherein one or more monitoring bodies (30, 50, 70, 90), which can be mounted on a bolt head or a bolt nut (20) of a bolt (22) in a positive engagement and / or a force-locking engagement and which is or which are constructed with a central receptacle (33) for the bolt head or the bolt nut (20) in such a way that it or they are damaged in the event of damage to, or destruction of, a bolt head or bolt nut (20) arranged in the central receptacle (33), of devices which comprise a sensor arranged on the monitoring body (30, 50, 70, 90), which sensor is constructed in order to determine a structural integrity of the monitoring body (30, 50, 70, 90), and which is preferably constructed in accordance with any one of the claims 1 to 6, are mounted on one or more bolts (22) of at least one flange connection of a wind energy installation and the structural integrity of the monitoring bodies (30, 50, 70, 90) is monitored by means of the sensors on the monitoring bodies (30, 50, 70, 90), whereby in the event of damage to, or destruction of, one or more monitoring bodies (30, 50, 70, 90), a damage of the flange connection (3) is indicated.

13. The method in accordance with claim 12, **characterised in that** the wind energy installation is shut down if a damage to the flange connection is indicated.

14. The method in accordance with claim 12 or 13, **characterised in that** several sensors of several of the devices are operated in series or are grouped into groups.

15. The method in accordance with any one of the claims 11 to 14, **characterised in that**, in the event of damage to, or destruction of, the monitoring body (30, 50, 70, 90), the sensor of a monitoring body (30, 50, 70, 90) emits a signal, or damage is detected if the sensor of a monitoring body (30, 50, 70, 90), which sensor comprises at least one electrical conductor (36, 56, 76, 96) which at least substantially surrounds the central receptacle once or several times, which electrical conductor is constructed in particular as a wire, as an electrically conductive fibre or as an electrically conductive coating on the monitoring body, is not detected during the monitoring due to an interruption of its electrical conductor (36, 56, 76, 96), or a continuously present signal is interrupted.

## Revendications

1. Dispositif servant à surveiller un raccord à bride, en particulier soumis à des contraintes dynamiques élevées, d'une éolienne avec un corps de surveillance (30, 50, 70, 90) pouvant être monté en appui à complémentarité de forme et/ou à force sur une tête de boulon ou un écrou de boulon (20) d'un boulon (22), réalisé sous la forme d'un capuchon d'écrou, avec un logement (33) central pour la tête de boulon ou l'écrou de boulon (20), dans lequel le corps de surveillance (30, 50, 70, 90) est réalisé pour être endommagé lors d'un endommagement ou d'une destruction d'une tête de boulon ou d'un écrou de boulon disposée ou disposé dans le logement (33) central, et un capteur disposé au niveau du corps de surveillance (30, 50, 70, 90), qui est réalisé pour constater une intégrité structurelle du corps de surveillance (30, 50, 70, 90), dans lequel le corps de surveillance présente au niveau d'un ou de plusieurs coins du logement central et/ou au niveau d'une ou de plusieurs arêtes du logement central des emplacements de rupture théorique (38, 58, 78, 98) et/ou le capteur présente au moins un conducteur (36, 56, 76, 96) électrique encerclant au moins sensiblement une fois ou plusieurs fois le logement central.

2. Dispositif selon la revendication 1, **caractérisé en ce que** le corps de surveillance (30, 50, 70, 90) est réalisé sous la forme d'une pièce moulée en partie plastique, qui présente des emplacements de rupture théorique (38, 58, 78, 98), qui sont réalisés en particulier sous la forme d'emplacements avec une épaisseur de matériau réduite.

3. Dispositif selon la revendication 1 ou 2, **caractérisé en ce que** le corps de surveillance (30, 50, 70, 90) présente un système de fixation servant à la fixation axiale, en particulier amovible, sur une tête de boulon ou un écrou de boulon (20), dans lequel en particulier le système de fixation présente au moins un élément de fixation réalisé pour venir en prise avec un filetage extérieur d'un boulon (22), qui est réalisé sur ressorts et/ou peut être immobilisé au moyen d'un moyen d'immobilisation, en particulier d'un anneau de retenue (97) ou d'un serre-câbles.

4. Dispositif selon l'une quelconque des revendications 1 à 3, **caractérisé en ce que** le capteur présente l'au moins un conducteur (36, 56, 76, 96) électrique encerclant au moins sensiblement une fois ou plusieurs fois le logement central, dans lequel le conducteur électrique est réalisé sous la forme d'un fil métallique, sous la forme d'une fibre électroconductrice ou sous la forme d'un revêtement électroconducteur au niveau du corps de surveillance (30, 50, 70, 90) .

5. Dispositif selon la revendication 4, **caractérisé en ce qu'**au moins une fiche de raccordement est comprise pour établir un contact avec le capteur, qui est reliée de manière électroconductrice aux extrémités de l'au moins un conducteur (36, 56, 76, 96) électrique et/ou une puce RFID réalisée aux fins de la transmission de signaux sans fil et/ou aux fins du fonctionnement sans fil et/ou aux fins de l'alimentation en énergie sans fil du capteur est comprise avec un code clair.

6. Dispositif selon l'une quelconque des revendications 1 à 5, caractérisé en en ce qu'un affichage de déclenchement optique, en particulier une DEL à faible courant (99a), est compris.

7. Système servant à surveiller un raccord à bride, en particulier soumis à des contraintes dynamiques élevées, d'une éolienne avec une multitude de dispositifs selon l'une quelconque des revendications 1 à 6 et un système d'évaluation, qui est relié ou réalisé avec la multitude de dispositifs sans fils ou de manière filaire pour recevoir des signaux des capteurs des dispositifs.

8. Système selon la revendication 7, **caractérisé en ce que** la multitude des dispositifs sont branchés en série ou en parallèle, ou plusieurs capteurs sont branchés en série les uns derrière les autres et chaque sous-groupe individuel ou les sous-groupes des capteurs câblés en série présentent respectivement un affichage de déclenchement.

9. Système selon la revendication 7 ou 8, **caractérisé en ce que** des écrous ou des têtes de boulon (20) sont équipés des dispositifs seulement dans une zone connue comme étant critique du raccord à bride.

10. Système selon l'une quelconque des revendications 7 à 9, **caractérisé en ce que** pour des capteurs, qui requièrent une alimentation en énergie externe et/ou et/ou servant à la transmission de signaux, un raccordement inductif ou un raccordement par l'intermédiaire par l'intermédiaire d'une bague collectrice ou un raccordement par câbles, en particulier protégé au moyen d'une chaîne porte-câbles, des capteurs à une source de courant et/ou une unité d'évaluation externe est compris.

11. Eolienne avec un système servant à surveiller un raccord à bride, en particulier soumis à des contraintes dynamiques élevées, selon l'une quelconque des revendications 7 à 10.

12. Procédé servant à surveiller un raccord à bride, en particulier soumis à des contraintes dynamiques élevées, d'une éolienne, dans lequel un ou plusieurs corps de surveillance (30, 50, 70, 90), lequel ou lesquels peuvent être montés en appui par complémentarité de forme et/ou à force sur une tête de boulon ou un écrou de boulon (20) d'un boulon (22) et est ou sont réalisés avec un logement (33) central pour la tête de boulon ou l'écrou de boulon (20) de manière à être endommagés lors d'un endommagement ou d'une destruction d'une tête de boulon ou d'un écrou de boulon disposée/disposé dans le logement (33) central, de dispositifs, lesquels présentent un capteur disposé au niveau du corps de surveillance (30, 50, 70, 90), qui est réalisé pour constater une intégrité structurelle du corps de surveillance (30, 50, 70, 90) et de préférence sont réalisés selon l'une quelconque des revendications 1 à 6, sont montés sur un ou plusieurs boulons (22) d'au moins un raccord à brode d'une éolienne et l'intégrité structurelle des corps de surveillance (30, 50, 70, 90) est surveillée au moyen des capteurs au niveau des corps de surveillance (30, 50, 70, 90), dans lequel un endommagement du raccord à bride (3) est signalé en cas d'endommagement ou de destruction d'un ou de plusieurs corps de surveillance (30, 50, 70, 90).

13. Procédé selon la revendication 12, **caractérisé en ce que** l'éolienne est mise en arrêt lors de la signalisation d'un endommagement du raccord à bride.

14. Procédé selon la revendication 12 ou 13, **caractérisé en ce que** plusieurs capteurs de plusieurs des dispositifs fonctionnent en série ou sont groupés en groupes.

15. Procédé selon l'une quelconque des revendications 11 à 14, **caractérisé en ce que** le capteur d'un corps de surveillance (30, 50, 70, 90) émet un signal en cas d'endommagement ou destruction du corps de surveillance (30, 50, 70, 90), ou un endommagement est constaté quand le capteur d'un corps de surveillance (30, 50, 70, 90), lequel capteur présente au moins un conducteur (36, 56, 76, 96) électrique encerclant au moins sensiblement une fois ou plusieurs fois le logement central, lequel conducteur électrique est réalisé sous la forme d'un fil métallique, sous la forme d'une fibre électroconductrice ou sous la forme d'un revêtement électroconducteur au niveau du corps de surveillance, n'est pas identifié du fait d'une coupure de son conducteur (36, 56, 76, 96) électrique lors d'une surveillance ou un signal en cours en continu est interrompu.
